**Europäisches Patentamt**

**European Patent Office**

**Office européen des brevets**

(19)

(11) **EP 1 528 486 A2**

(12) **EUROPEAN PATENT APPLICATION**

(43) Date of publication:
**04.05.2005 Bulletin 2005/18**

(51) Int Cl.⁷: **G06F 17/30**

(21) Application number: **04256655.4**

(22) Date of filing: **28.10.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **31.10.2003 JP 2003371881
12.02.2004 JP 2004034729**

(71) Applicant: **Hewlett-Packard Development
Company, L.P.
Houston, TX 77070 (US)**

(72) Inventor: **Kawatani, Takahiko
Yokohama Kanagawa, 236-0038 (JP)**

(74) Representative: **Jehan, Robert et al
Williams Powell
Morley House
26-30 Holborn Viaduct
London EC1A 2BP (GB)**

(54) **Classification evaluation system, method, and program**

(57)     A document classification sys Lem automatically sorts an input document into pre-determined document classes by matching the input document to class-models. The content of the input documents changes with time and the class models deteriorate. Similarities between a training document set and an actual document set (which is classified into multiple classes) is calculated with respect to each class. A class with a low similarity is selected. Alternatively, classes where deterioration has occurred are detected by calculating similarities between the training document set in each individual class and the actual document set in all other classes. Class-pairs with low similarities are calculated. Close topic class-pairs are detected by calculating similarities between the training document set and all the class-pairs. Class-pairs with low similarities are selected.

FIGURE 3

**Description**

The present invention relates to a technology for classifying documents and other patterns. More particularly, the present invention has an object to improve operational efficiencyby enabling proper evaluation of the appropriateness of class models according to each occasion.

Document classificaticn is a technology for classifying documents into predetermined groups, and has become more important with an increase in the circulation of information. Regarding the document classification, various methods, such as the vector space model, the k nearest neighbor method (kNN method), the naive Bayes method, the decision tree method, the support vector machines method, and the boosting method, have heretofore been studied and developed. A recent trend in document classification processing has been detailed in "Text Classification-Showcase of Learning Theories" by Masaaki Nagata and Hirotoshi Taira, contained in the Information Processing Society of Japan (IPSJ) magazine, Vol. 42, No. 1 (January 2001). In each of these classification methods, information on a document class is described in a particular form and is matched with an input document. The information will be called a "class model" below.

The class model is expressed by, for example, an average vector of documents belonging to each class in the vector space model, a seL of the vectors of documents belonging to each class in the kNN method, and a set of simple hypotheses in the boosting method. In order to achieve precise classification, the class model must precisely describe each class. The class model is normally constructed using large-volume documents as training data for each class.

Document classification is based on recognition technologies, just as character recognition and speech recognition are. However, as compared to character recognition and speech recognition, document classification is unique in the following ways.

(1) In the case of character recognition and speech recognition, it is impossible to imagine minute-by-minute changes occurring in patterns that belong to the same class. A character pattern belonging to class "2" ought to be the same at present and a year ago. However, in the case of documents, the content of a document will change minute-by-minute even within the same class. For example, if one imagines a class called "international politics", the topics of documents belonging to this class may vary significantly before and after the Iraq War. Therefore, a class model that is used for "international politics" must be reconstructed as time goes by.

(2) In the case of a character and a speech utterance, a person can immediately judge to which class an inputted character or speech utterance belongs to. Therefore, collecting training data for constructing class models is not difficult, However, in the case of documents, it is impossible to judge to which class an inputted document belongs without reading the inputted document. Much time is required for a human to read the document even if he or she skims it. Therefore, in the case of documents, there is an extremely large burden involved in collecting large-volume, reliable training data.

(3) For the same reasons as described in reascn (2), in the case of document classification, it is not easy to know how precisely the classification is being performed on vast amounts of unknown documents.

(4) In the case of a character and a speech utterance, it is virtually self-evident what types of classes exist for the inputted character and speech utterance. For example, in the case of character recognition there are 10 classes for recognizing numerals. However, the classes for document recognition can be set freely, and the types of classes to be used are determined by the desires of a user, goals of the system designer, etc.

Therefore, in the case of document recognition, reason (1) requires frequent reconstruction of the class models in order to precisely classify the documents according to each occasion during actual operation. However, reconstruction of the class models is not easy because of reason (2). In order to alleviate the burden involved in reconstructing the class models, it is preferable not to reconstruct all the classes. Rather, it is preferable to reconstruct only those classes in which the class model has deteriorated. However, reason (3) also makes it difficult to detect the classes in which deterioration has occurred. For these reasons, costs of actual operation in the document classification are not inexpensive.

Moreover, in the case of document classification, there is no problem when the topics represented by the artificially determined classes are far (i.e., different) from each other, but there are instances where there exist class-pairs which represent topics that are close (i.e. , similar) to each other. Such class-pairs can cause misclassifications to occur between the class-pairs, and can cause deterioration of system performance. Therefore, when designing the document classification system, it is necessary to detect topically close class-pairs as quickly as possible and reconsider the classes. In order to do this, after designing the document classification system, it is possible to detect problematic class-pairs by using test data to perform an evaluation, buL this requires labor and time. It is desirable to detect these topically close class-pairs right after the training data is prepared, i.e., as soon as the training data has been collected and class labeling is finished for each document.

An object of the present invention is to enable easy detection of topically close class-pairs and classes where a class model has deteriorated, to thereby reduce the burden involved in designing a document classification system and the burden involved in reconstructing class models.

First, a few comments are made regarding class model deterioration. The deterioration of the class model for a class "A" can manifest its influence in two ways. One is a case where an input document belonging to class A can no longer be detected as belonging to class A. The other is a case where the document is misclassified into a class "B" instead of class A. Suppose that "recall" for class A is defined as the ratio of the number of documents judged to belong to class A to the number of documents belonging to class A and that "precision" for class A is defined as the ratio of the number of documents actually belonging to class A among the documents judged to belong to class A. Thus, the influence of the class model deterioration manifests itself in a drop in the recall or in the precision. Therefore, the problem is how to detect the classes where the recall and the precision have decreased. The present invention employs the following approach. (It is assumed here that even when the recall and precision drop in a given class, there still exist many documents classified correctly into corresponding classes.)

in a case where the recall of class A has decreased, it is imaginable that a mismatch would occur between the topic of the input document belonging to class A and the topic represented in the class model for class A. The topic of class A represented in the class model is determined by the training data when the class model was constructed. The set of documents classified in class A during the actual operation of the document classification system are referred to as the "class A actual document set". Whether or not the above-mentioned mismatch has occurred is determined by the closeness (i.e., "similarity") between the class A actual document set and the training document set used for constructing the class model of class A. If the similarity is high, then the content of the class A actual document set and the training document set used for constructing the class model are close to each other. Thus, it can be judged that deterioration has not occurred. Conversely, if the similarity is low, the topic of the input document belonging to class A has shifted. Thus, it can be judged that the class model has deteriorated. The class model must be reconstructed for class where it is judged that deterioration has occurred.

Furthermore, if there are many cases where the input document belonging to class A is misclassified into class B, then it is understood that the topic represented in the document belonging to class A has shifted and has become extremely close to the class model of class B. Therefore, it is understood that the closeness (i.e., the similarity) between the class A actual document set and the training document set used to construct the class B class model is very high. Therefore, a high similarity, is evidence that the topical content of the document belonging to class A is approaching class B. When this occurs, it can be judged that deterioration has occurred in the class models of both class A and class B. Therefore, it is necessary to reconstruct the class models of both class A and class B.

Next, explanation is given regarding class-pairs which are topically close to each other. When class-pairs are topically close to each other, the similarly between the document sets of the classes must be high. Therefore, by obtaining the similarities between all class-pairs and selecting those class-pairs with similarities that are higher than a given value, these class-pairs are judged to be those having topics that are close to each other. For these kinds of class-pairs it is necessary to reconsider whether or not the class settings are made appropriately, whether the definitions of the classes are appropriate, and the like.

As described above, the present invention collects not only the training document set for each class, but also the actual document set for each class, and then obtains the similarities between training document sets for all the class-pairs, the similarities between the training document sets and the actual document sets for all the classes, and the similarities between the training document sets and the actual document sets for all the class-pairs. This enables detection of classes where reconstruction and reconsideration are necessary, thus enabling extremely easy modification of the document classification system design, and reconstruction of the class models.

In the accompanying drawings:

Fig. 1 is a constructional diagram of a system for executing a preferred embodiment of the present invention;

Fig. 2 is a block diagram of a preferred embodiment of the present invention;

Fig. 3 is a flowchart of a procedure of a preferred embodiment of the present invention for detecting close topic class-pairs from a given training document set;

Figs. 4A and 4B are diagrams including relationships between a document set, documents, and document segment vectors;

Fig. 5A is a flowchart of a procedure in accordance with a preferred embodiment of the present invention for detecting a class where a class model has deteriorated, as in Embodiment 2 of the present document;

Fig. 5B is a flowchart of a procedure in accordance with a preferred embodiment of the present document for detecting the class where the class model has deteriorated, as in Embodiment 3 of the present invention;

Fig. 6 is a graph including relationships between similarity of a training document set across classes (horizontal axis) versus error rates of a test document set across classes (vertical axis); and

Fig. 7 is a graph of relationships between similarity between a training document set and a test document set in the same class (horizontal axis) versus recalls of a test document set (vertical axis).

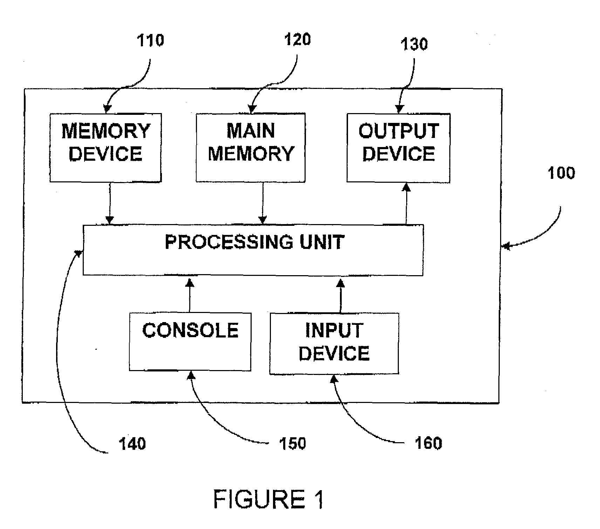

Fig. 1 is a diagram including housing 100 containing a processor arrangement including a memory device 110, a main memory 120, an output device 130, a central processing unit (CPU) 140, a console 150 and an input device 160. The central processing unit (CPU) 140 reads a control program from the main memory 120, and follows instructions inputted from the console 150 to perform information processing using document data inputted from the input device 160 and information on a training document and an actual document stored in the memory device 110 to detect a close topic class-pair, a deteriorated document class, etc. and output these to the output device 130.

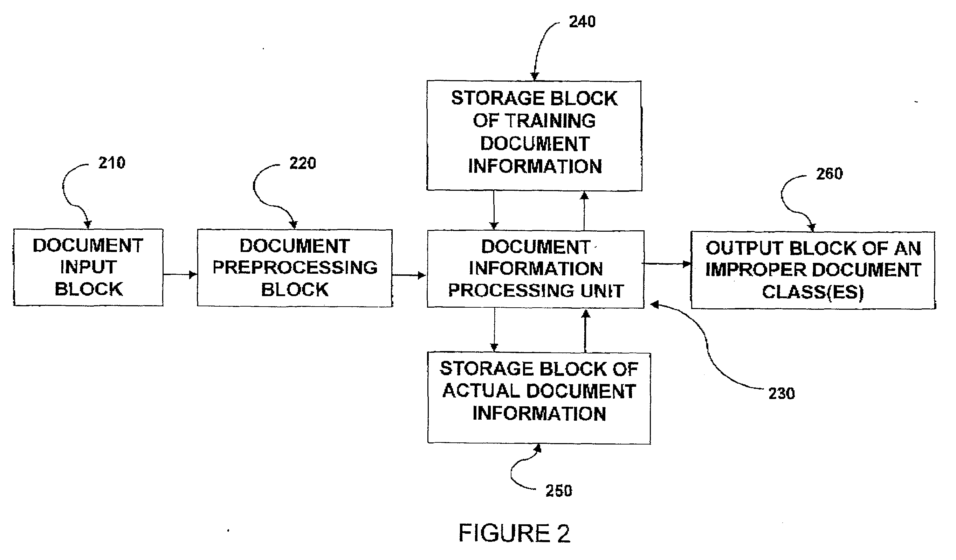

Fig. 2 is a block diagram including a document input block 210; a document preprocessing block 220; a document information processing unit 230; a storage block 240 of training document information; a storage block 250 of actual document information; an output block 260 of an improper document class(es). A set of documents which auser wishes to process are inputted into the document input block 210. At the document preprocessing block 220, term extraction, morphological analysis, document vector construction and the like are performed on the inputted document. values for each component of the document vector are determined based on the frequency with which a corresponding term occurs within the text, and based on other information. The storage block of training document information 240 stores training document information for each class, which is prepared in advance. The storage block 250 of actual document information stores actual document information for each class, which is obtained based on classification results. The document information processing unit 230 calculates similarities among all class-pairs for the training document set, and calculates the similarity between a training document set in each class and the actual document set in the same class, and calculates similarities between a training document set in each class and the actual document set in all other classes, for example, to obtain a close topic pair and a deteriorated class. The output block 260 of an improper document class(es) outputs the results obtained by the document information processing unit 230 to an output device such as a display.

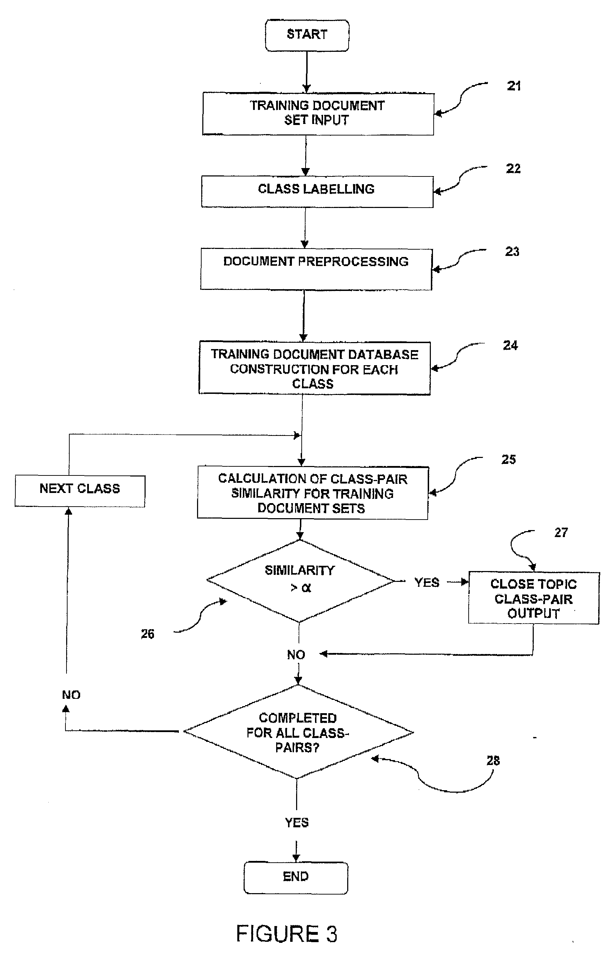

Fig. 3 is a flowchart of Embodiment 1 of operations performed by the processor of Fig. 1 for detecting a close topic pair in a given training document set. The method of Fig. 3 is typically practiced on a general-purpose computer by running a program that incorporates. Fig. 3 is a flowchart of operation by a computer running such a program. Block 21 represents input of the training document set. Block 22 represents class labeling. Block 23 represents document preprocessing. Block 24 represents construction of a training document database for each class. Block 25 represents calculation of the class-pair similarity for the training document sets. Block 26 represents a comparison made between the similarity and a threshold value. Block 27 represents output of a class-pair having a similarity that exceeds the threshold value. Block 28 represents processing to check whether processing is completed for all class-pairs. Hereinafter, Embodiment 1 is described using an English text document as an example.

First, at block 21 (input of the training document set), document sets for building the document classification system are inputted. At block 22 (class labeling), names of classes to which the documents belong are assigned to each document according to definitions of classes in advance. In some cases, 2 or more class names are assigned to one document. At block 23 (document preprocessing), preprocessing is performed on each of the input documents, which includes term extraction, morphological analysis, construction of the document vectors, and the like. In some instances, a document is divided into segments and document segment vectors are constructed, so that the document is expressed by a set of document segment vectors. The term extraction involves searching for words, numerical formulae, a series of symbols, and the like in each of the input documents. Here, "words", "series of symbols", and the like are referred to collectively as "terms". In English text documents, it is easy to extract terms because a notation method in which the words are separately written has been established.

Next, the morphological analysis is performed through parts of speech tagging in each of the input documents. The document vectors are constructed first by determining the number of dimensions of the vectors which are to be created from the terms occurring in the overall documents, and determining correspondence between each dimension and each term. Vector components do not have to correspond to every term occurring in the document. Rather, it suffices to use the results of the parts of speech tagging to construct the vectors using, for example, only those terms that are judged to be nouns or verbs. Then, either the frequency values of the terms occurring in each of the documents, or values obtained fromprocessing those values, are assigned to vector components of the corresponding document. Each of the input documents may be divided into document segments. The document segments are the elements that constitute the document, and their most basic units are sentences. In the case of English text documents, the sentences end with a period and a space follows thereafter, thus enabling easy extraction of the sentence. Other methods of dividing the documents into document segments include a method of dividing a complex sentence into principal clause and at least one subordinate clause, a method in which plural sentences are collected into the document segments so that the number of the terms of the document segments are substantially equal, and a method in which the document is divided from its head irrespective of sentences so that the numbers of terms included in the document segments are substantially equal.

The document segment vectors are constructed similarly to the construction cf the document vectors. That is, either the frequency values of the terms occurring in each of the document segments, or values obtained from processing those values, are assigned to vector components of the corresponding document segment. As an example, it is assumed that the number of kinds of terms to be used in the classification is M, and M-dimension vectors are used to express the document vectors. Let $d_r$ be the vector for a given document. Assume that "0" indicates non-existence of a term and "1" indicates existence of a term. The vector can be represented as $d_r = (1,0,0...,l)^T$, where T indicates a transpose of the vector. Alternatively, when values of vector components are assigned according to the frequency of the terms, the vector can be represented as $d_r = (2,0,1...,4)^T$.. At block 24 (construction of the training document database for each class), the preprocessing results for each document are sorted on a class basis and are stored in the databases based on the results from block 22. At block 25 (calculation of class-pair similarity for training document sets), the training document sets are used to calculate similarities for designated class-pairs. For the first repetition, the class-pair is predetermined; from the second time onward, the class-pair is designated according to instructions from block 28.

Various methods are known for deriving similarities between document sets. For example, let $\Omega_A$ and $\Omega_B$ be documents sets for class A and class B, respectively. Let $d_r$ be defiend as the document vector of document r may be defined. The following formulae can be used to define average document vectors $d_A$ and $d_B$ in class A and class B:

$$\mathbf{d}_A = \sum_{r \in \Omega_A} \mathbf{d}_r \Big/ |\Omega_A|$$

$$\mathbf{d}_B = \sum_{r \in \Omega_B} \mathbf{d}_r \Big/ |\Omega_B|$$

In these formulae, $|\Omega_A|$ and $|\Omega_B|$ each represents a number of documents in the document sets $\Omega_A$ and $\Omega_B$, respectively. The similarity between training document sets in class A and class B is expressed as $\text{sim}(\Omega_A, \Omega_B)$, is obtained using cosine similarity as follows:

$$(1) \qquad sim(\Omega_A, \Omega_B) \simeq d_A{}^T d_B / (\|d_A\| \|d_B\|)$$

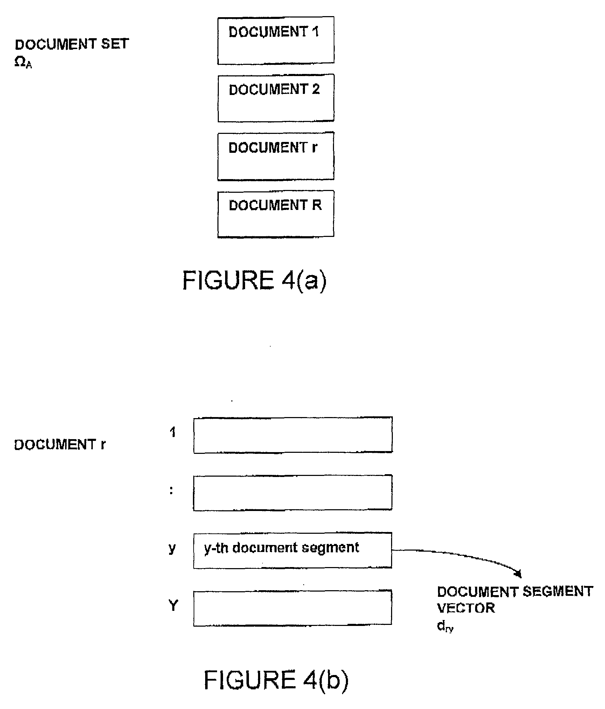

In the formula, $\| d_A \|$ expresses a norm for the vector $d_A$. The similarity defined by Formula (1) does not reflect information about co-occurrence among terms. The following calculation method can be used to obtain a similarity which does reflect information about co-occurrence of terms in the document segments. Assume that the r-th document (document r) in the document set $\Omega_A$ has Y document segments. Let $d_{ry}$ denote the vector of the y-th document segment. In Fig. 4A, the document set $\Omega_A$ is shown as being constituted of a group of documents from document 1 to document R. In Fig. 4B, the document r in the document seL $\Omega_A$ is shown as being further constituted of Y document segments. Fig. 4B is a conceptual view of how the document segment vector $d_{ry}$ is generated from the y-th document segment. Here, the matrix defined by the following formula for the document r is called a "co-occurring matrix".

$$S_r = \sum_{y=1}^{Y} \mathbf{d}_{ry} \mathbf{d}_{ry}{}^T$$

When the total matrix of the co-occurring matrices for the documents in class A and the total matrix of the co-occurring matrices for the documents in class B are defined as $S^A$ and $S^B$, respectively, the matrices are derived as follows :

$$(2) \qquad S^A = \sum_{r \in \Omega_A} S_r$$

$$(3) \quad S^B = \sum_{r \in \Omega_B} S_r$$

In this case, the similarity sim($\Omega_A,\Omega_B$) between the training document sets in class A and class B is defined by the following formula using the components of the matrix $S^A$ and the matrix $S^\circ$:

$$(4) \quad sim(\Omega_A, \Omega_B) = \sum_{m=1}^{M} \sum_{n=1}^{M} S^A_{mn} S^B_{mn} \Big/ \sqrt{\sum_{m=1}^{M} \sum_{n=1}^{M} \left(S^A_{mn}\right)^2 \sum_{m=1}^{M} \sum_{n=1}^{M} \left(S^B_{mn}\right)^2}$$

In the formula, $5^A mn$ represents a component value of the m-th row and the n-th column in the matrix $S^A$. M indicates the dimension of the document segment vector, i.e., the number of types of terms occurring in the document. If the components of the document segment vector are binary (i.e., if "1" indicates existence of the m-th term and "0" non-existence) , then $S^A_{mn}$ and $S^B_{mn}$ represent the number of document segments where the m-th term and the n-th term co-occur in the training document sets in class A and class B, respectively. This is clear from Formula (2) and Formula (3). Thus, it is understood that information about term co-occurrence has been reflected in Formula (4). The similarities can be obtained with high accuracy by deriving the information about term co-occurrence. Note that when non-diagonal components in the matrices $S^A$ and $S^B$ are not used in Formula (4), a substantially equivalent value to the similarity defined in Formula (1) is obtained.

At block 26, a judgment is made as to whether or not the similarity (the first similarity) exceeds the predetermined threshold value (the first threshold value). At block 27, if the similarity of the training document sets between the designated classes does exceed the threshold value that has been designated in advance, then the class-pair concerned is detected as a close topic class-pair. More specifically, with the proviso that a represents a threshold value, if the relationship

$$sim(\Omega_A, \Omega_B) > \alpha$$

is satisfied, the topic is considered to be close (similar) between the classes A and B. The value of a can be set easily by experiments using a training document set having known topical content. As regards the close topic class-pair thus detected, the class definitions have to be then reviewed with respect to that pair, reconsideration should given to whether or not to create those classes, and the appropriateness of the labeling of those training documents is verified. At block 28, a check is performed to verify whether or not the processing of blocks 25, 26, and 27 was performed for all the class-pairs. If there are no un-processed class-pair, then the processing ends. If there is an un-processed class-pair, then the next class-pair is designated and the processing returns to block 25.

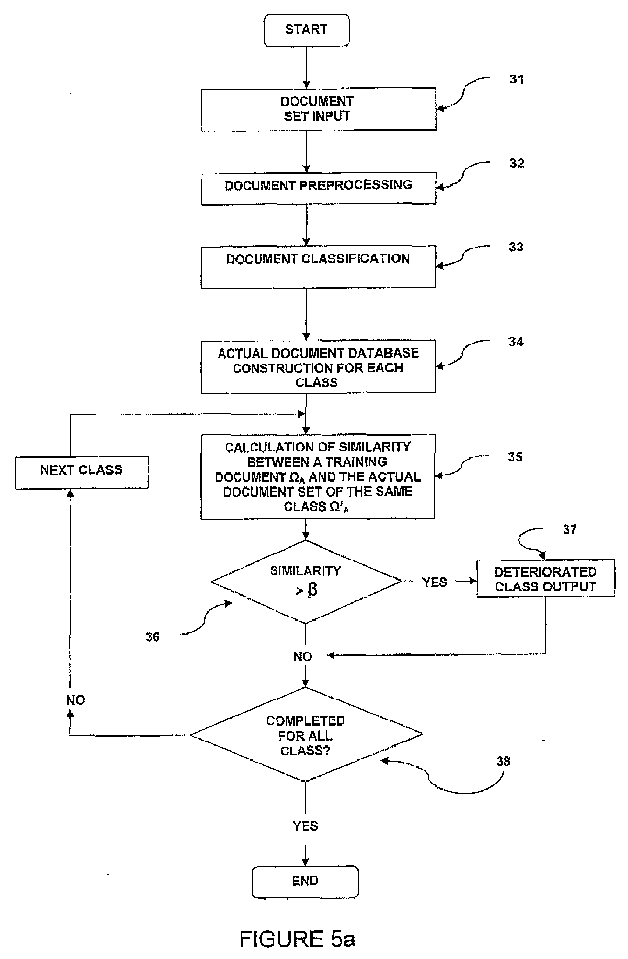

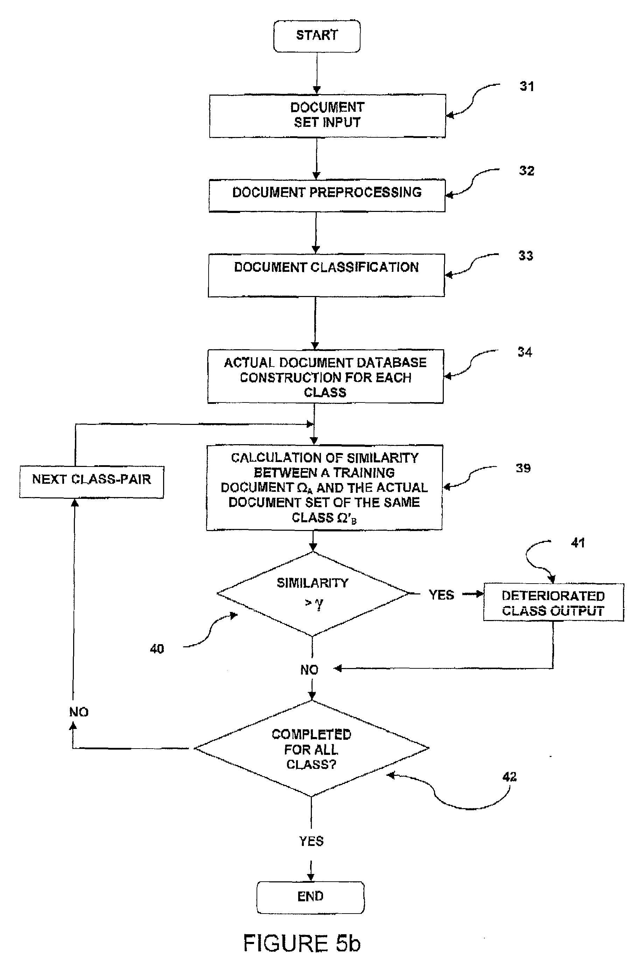

Fig. 5A and Fig. 5B are flow diagrams of operations performed by the processor of Fig. 1 for Embodiment 2 and Embodiment 3. Figs. 8A and 5B are operations for detecting the deteriorated class, as applied in an actual document classification system. The method can also be practiced on a general-purpose computer by running a program that runs the programs of Fig. 5A and Fig. 5B. First, an explanation is given regarding Embodiment 2 which is shown in Fig. 5A. Block 31 represents document set input. Block 32 represents document preprocessing. Block 33 represents document classification processing. Block 34 represents construction of an actual document database for each class. Block 35 represents calculation of the similarity between a training document set and the actual document set in the same class. Block 36 represents a comparison between the similarity and a threshold value. Block 37 represents processing that is performed in a csae where the similarity between the training document set in each class and the actual document set in the same class exceeds the threshold value. Block 38 represents processing to check whether processing is complete for all classes.

Hereinafter, a detailed explanation is given regarding the flowchart of Fig. 5A. First, at block 31, the document to be actually classified is supplied to the document classification system which is in a state of operation. At block 32, the same document preprocessing is performed as in block 23 in Fig. 2, and aL block 33, document classification processing is performed on the inputted document. Various methods have already been developed for classifying documents, including: vector space model, the k nearest neighbor (kNN) method, the naive Bayes method, the decision tree method, the support vector machines method, the boosting method, etc. Any of these methods can be used in block 33. At block 34, the actual document database is constructed for each class using the results from the document classification processing performed at block 33. The actual document sets that are classified into class A and class B

are represented as $\Omega'_A$ and $\Omega'_B$, respectively.

At block 35, the similarity between the training document set in a designated class and the actual document set in the same class is calculated. For the first repetition, the class is designated in advance; from the second repetition onward, the designation of the class-pair is done according to instructions from block 38. The similarity $sim(\Omega_A, \Omega'_A)$ between the training document set $\Omega_A$ in class A and the actual document set $\Omega'_A$ in the same class (i.e., the second similarity) is obtained similarly to Formula (1) and Formula (4).

Then, at block 36, the similarity is compared against the threshold value, and then at block 37, detection is performed to find a deteriorated class. With the proviso that the threshold value used at this time is defined as $\beta$, when the following relationship of:

$$sim(\Omega_A, \Omega'_A) < \beta$$

is satisfied, the topic of the actual document which should be in class A is considered to be shifted, and the class model for class A is judged to be deteriorated. At block 38, a check is performed to verify whether the processing of blocks 35, 36, and 37 has been performed on all the classes. If there are no un-processed classes, then the processing ends. If there is an unprocessed class, then the next class is designated and the processing returns to block 35.

Next, an explanation is given regarding Embodiment 3 with reference to Fig. 5B. Blocks 31 through 34 are similar to those of Fig. 5A, so explanations thereof are omitted here. At block 39, the similarities between the training document set in each class and the actual document sets in all the other classes are calculated. Block 40 and block 41 correspond to processing performed in a case where the similarity of the training document set in each class and the actual document set in the other classes exceeds a threshold value. Block 42 represents processing to check whether the processing is completed for all class-pairs.

The similarity $sim(\Omega_A, \Omega'_B)$ between the training document set $\Omega_A$ of class A and the actual document set $\Omega'_B$ of class B (the third similarity) are obtained blocks 40 and 41 by using Formula (1) and Formula (4). For the first repetition, the class-pair is designated in advance; from the second repetition onward, the class-pair is designated according to instructions from block 42. With the proviso that the threshold value in block 40 and block 41 is defined as y, when the following relationship of:

$$sim(\Omega_A, \Omega'_B) > \gamma$$

is satisfied, the topic of the document in class B is close to class A and the class models of both class A and class B are judged to be deteriorated.

Block 42 is the ending processing. A check is performed to verify whether or not the processing of blocks 39, 40, and 41 has been performed for all the class-pairs. If there are no un-processed class-pairs, then the processing ends. If there is an un-processed class-pair, then the next class-pair is designated and the processing returns to block 39. The values of $\beta$ and y, which are used in embodiment 2 and Embodiment 3, must be set in advance by way of experiment using training document sets having known topical content.

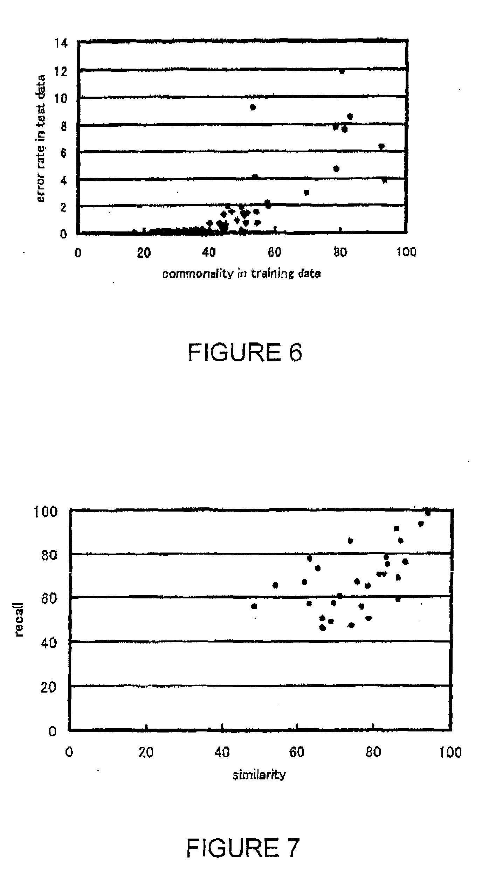

As described above, embodiments 1, 2 and 3 make it easy to detect close topic class-pairs and deteriorated classes as improper classes. Experimental results are now discussed with respect to Reuters-21578 document corpus, which is widely used in document classification research. The kNN method is used as the document classification method. Figure 6 is a diagram of the relationship between the degree of topical closeness in each class-pair and an error rate. Each point corresponds to a specific class-pair.

The horizontal axis Figure 6 represents the similarity of the training document sets between classes in percentage. The vertical axis represents the error rate for the test document sets between two classes in percentage. The training document set and the test document set are designated in the Reuters-21578 document corpus, and therefore the test document set is treated as the actual document set. The error rate between class A and class B is a value which is derived by dividing the sum of the number of the class A documents misclassified into class B documents and the number of the class B documents misclassified into class A documents by the sum of the documents in class A and class B. Fig. 6 indicates that class-pairs with a high similarity (i.e., close topic class-pairs) for the training document set have a high error rate for the test document set. Fig. 6 proves that embodiments 2 and 3 can easily detect close topic class-pairs. By again constructing again the class models of those classes, the performance of the document classification system will be improved.

Fig. 7 is a diagram indicating detection of the deteriorated class as an example. In Fig. 7, the horizontal axis represents, in percentage, the similarity of training document set and the test document set in the same class. The vertical axis represents, in percentage, a recall with respect to the test document set. Fig. 7 indicates the relationship between the similarity and the recall. Each point corresponds to a single class. As is apparent from Fig. 7, in classes where the recall is low, the similarity between the training document set and the test document set is also low. Therefore, by selecting classes with the lower similarities than the threshold, deteriorated classes can be easily detected. Class models only need to be updated for those deteriorated. This can reduce costs significantly as compared to when the class models must be updated for all the classes.

The embodiments described above have been explained using a text document as an example. However, the principles of present invention can also be applied to patterns which are expressed in the same way and have the same qualities as the documents discussed in the embodiments. More specifically, the present invention can be applied in the same way when the "documents" as described in the embodiments are replaced with patterns, the "terms" are replaced with the constitutive elements of the patterns, the "training documents" are replaced with training patterns, the "document segments" are replaced with pattern segments, the "document segment vectors" are replaced with pattern segment vectors, etc.

The disclosures in Japanese patent application Nos. 2003-371881 and 2004-034729, from which this application claims priority, and in the abstract accompanying this application are incorporated herein by reference.

**Claims**

1.  A document classification evaluation system having a unit to perform classification of an input document by matching the input document to class models for classes based on training document information for each class, the system comprising:

    (a) a first calculator to calculate a similarity with respect to all class-pairs using a training document set for each class; and
    (b) a detector to detect a class-pair where the similarity is greater than a threshold value.

2.  A document classification evaluation system according to claim 1, wherein the first calculator comprises:

    (a) a first selector to detect and select terms used for detecting a class-pair from each training document;
    (b) a first divider to divide each training document into document segments;
    (c) a first vector generator to generate, for each training document, a document segment vector having a corresponding component with a value relevant to an occurrence frequency of a term occurring in the document segment; and
    (d) a second calculator to calculaLe similarities between training document sets for all the class-pairs based on the document segment vector of each training document.

3.  A document classification evaluation system having a unit to perform classification of an input document by matching the input document to class models for classes based on training document information for each class, the system comprising:

    (a) a first constructor to construct a class model for each document class based on a training document set;
    (b) a second constructor to construct an actual document set bymatching the input document to the class models for classification and sorting the input document into the document class to which the input document belongs;
    (c) a calculator to calculate a similarity between the training document set and the actual document set in the same class with respect to all document classes; and
    (d) a detector to detect a class where the similarity is smaller than a threshold value.

4.  A document classification evaluation system having a unit to perform classification of an input document by matching the input document to class models for classes based on training document information for each class, the system comprising:

    (a) a first constructor to construct a class model for each document class based on a training document set;
    (b) a second constructor to construct an actual document set by matching the input document to the class models for classification and sorting the input document into the document class to which the input document belongs;
    (c) a calculator to calculate a similarity between the training document set in each individual document class and the actual document set in all other document classes; and
    (d) a detector to detect a class-pair where the similarity is greater than a third threshold value.

**5.** A document classification evaluation system according to claim 3 or 4, wherein the calculator comprises:

(a) a selector to detect and select terms used for detecting one of a class and a class-pair from each training document and each actual document;
(b) a divider to divide each training document and each actual document into document segments;
(c) a vector generator to generate, for each training document and each actual document, a document segment vector having a corresponding component with a value relevant to an occurrence frequency of a term occurring in the document segment; and
(d) another calculator to calculate the similarity based on the document segment vector of each training document and each actual document.

**6.** A document classification evaluation system according to any preceding claim, comprising a further calculator to calculate the similarity based on a product sum of corresponding components between two total matrices each of which is obtained as the sum of co-occurring matrices S of all documents in each document set, wherein a co-occurring matrix S in a document is defined as;

$$S = \sum_{y=1}^{Y} \mathbf{d}_y \mathbf{d}_y^{T}$$

where the number of types of terms is M, there are Y document segments, and the vector of the y-th document segment is defined as dy = $(d_{y1},...,d_{yM})^T$ (where T represents a vector transpose).

**7.** A storage medium or storage device storing a document classification evaluation program which causes a computer to operate a unit to perform classification of an input document by matching the input document to class models for classes constructed based on training document information for each class, the program further causing the computer to operate as:

(a) a calculator to calculate a similarity with respect to all class-pairs using a training document set for each class; and
(b) a detector to detect a class-pair where the similarity is greater than a threshold value.

**8.** A storage medium or storage device storing a document classification evaluation program which causes a computer to operate a unit to perform classification of an input document by matching the input document to class models for classes constructed based on training document information for each class, the program further causing the computer to operate as:

(a) a first constructor to construct a class model for each document class based on a training document set;
(b) a second constructor to construct an actual document set by matching the input document to the class models for classification and sorting the input document into the document class to which the input document belongs;
(c) a calculator to calculate a similarity between the training document set and the actual document set in the same class with respect to all document classes; and
(d) a detector to detect a class where the similarity is smaller than a threshold value.

**9.** A storage medium or storage device storing a document classification evaluation program which causes a computer to operate a unit to perform classification of an input document by matching the input document to class models for classes constructed based on training document information for each class, the program further causing the computer to operate as:

(a) a first constructor to construct a class model for each document class based on a training document set;
(b) a second constructor to construct an actual document set by matching the input document to the class models for classification and sorting the input document into the document class to which the input document belongs;
(c) a calculator to calculate a similarity between the training document set in each individual document class and the actual document set in all other document classes; and
(d) a detector to detect a class-pair where the similarity is greater than a threshold value.

**10.** A document classification evaluation method that performs classification of an input document by matching the input document to class models for classes constructed based on training document information for each class, the method comprising the steps of:

    (a) calculating a similarity with respect to all class-pairs using a training document set for each class; and
    (b) detecting a class-pair where the similarity is greater than a threshold value.

**11.** A document classification evaluation method according to claim 10, wherein the step of calculating the similarity comprises the steps of:

    (a) detecting and selecting terms used for detecting a class-pair from each training document;
    (b) dividing each training document into document segments;
    (c) generating, for each training document, a document segment vector whose corresponding component has a value relevant to an occurrence frequency of a term occurring in the document segment; and
    (d) calculating similarities between training document sets for all the class-pairs based on the document segment vector of each training document.

**12.** A document classification evaluation method that performs classification of an input document by matching the input document to class models for classes constructed based on training document information for each class, the method comprising the steps of:

    (a) constructing a class model for each document class based on a training document set;
    (b) constructing an actual document set by matching the input document to the class models for classification and sorting the input document into the document class to which the input document belongs;
    (c) calculating a similarity between the training document set and the actual document set in the same class with respect to all document classes; and
    (d) detecting a class where the similarity is smaller than a threshold value.

**13.** A document classification evaluation method that performs classification of an input document by matching the input document to class models for classes constructed based on training document information for each class, the method comprising the steps of:

    (a) constructing a class model for each document class based on a training document set;
    (b) constructing an actual document set by matching the input document to the class models for classification and sorting the input document into the document class to which the input document belongs;
    (c) calculating a similarity between the training document set in each individual document class and the actual document set in all other document classes; and
    (d) detecting a class-pair where the similarity is greater than a threshold value.

**14.** A document classification evaluation method according to claim 12 or 13, wherein the step of calculating the similarity comprises the steps of:

    a class and a class-pair from each training document and each actual document;
    (b) dividing each training document and each actual document into document segments;
    (c) generating, for each training document and each actual document, a document segment vector whose corresponding component has a value relevant to an occurrence frequency of a term occurring in the document segment; and
    (d) calculating the similarity based on the document segment vector of each training document and each actual document.

**15.** A document classification evaluation method according to any one of claims 10 to 14, comprising the step of calculating the similarity based on a product sum of corresponding components between two total matrices each of which is obtained as the sum of co-occurring matrices S of all documents in each document set, wherein a co-occurring matrix S in a document is defined as:

$$S = \sum_{y=1}^{Y} \mathbf{d}_y \mathbf{d}_y^{T}$$

where the number of types of terms occurring is M, there are Y document segments, and the vector of the y-th document segment is defined as $d_y = (d_{y1},...,d_{yM})^T$ (where T represents a vector transpose).

**16.** A storage medium or storage device storing a pattern classification evaluation program which causes a computer to operate a unit to perform classification of an inputted pattern by matching the inputted pattern to class models for classes constructed based on training pattern information for each class, the program further causing the computer to operate as:

(a) a calculator to calculate a similarity with respect to all class-pairs using a training pattern set for each class; and
(b) a detector to detect a class-pair where the similarity is greater than a threshold value.

**17.** A pattern classification evaluation program which causes a computer to operate a unit to perform classification of an inputted pattern by matching the inputted pattern to class models for classes constructed based on training pattern information for each class, the program further causing the computer to operate as:

(a) a first constructor to construct a class model for each pattern class based on a training pattern set;
(b) a second constructor to construct an actual pattern set by matching the inputted pattern to the class models for classification and sorting the inputted pattern into the pattern class to which the inputted pattern belongs;
(c) a calculator to calculate a second similarity between the training pattern set and the actual pattern seL in the same class with respect to all pattern classes; and
(d) a detector to detect a class where the second similarity is smaller than a second threshold value.

**18.** A storage medium or storage device storing pattern classification evaluation program which causes a computer to operate a unit to perform classification of an inputted pattern by matching the inputted pattern to class models for classes constructed based on training pattern information for each class, the program further causing the computer to operate as:

(a) a first constructor to construct a class model for each pattern class based on a training pattern set;
(b) a second constructor to construct an actual pattern set by matching the inputted pattern to the class models for classification and sorting the inputted pattern into the pattern class to which the inputted pattern belongs;
(c) a calculator to calculate a similarity between the training pattern set in each individual pattern class and the actual pattern set in all other pattern classes; and
(d) a detector to detect a class-pair where the similarity is greater than a threshold value.

110 120 130

MEMORY
DEVICE

MAIN
MEMORY

OUTPUT
DEVICE

100

PROCESSING UNIT

CONSOLE

INPUT
DEVICE

140 150 160

FIGURE 1

260 — OUTPUT BLOCK OF AN IMPROPER DOCUMENT CLASS(ES)

240 — STORAGE BLOCK OF TRAINING DOCUMENT INFORMATION

230 — DOCUMENT INFORMATION PROCESSING UNIT

250 — STORAGE BLOCK OF ACTUAL DOCUMENT INFORMATION

220 — DOCUMENT PREPROCESSING BLOCK

210 — DOCUMENT INPUT BLOCK

FIGURE 2

START

TRAINING DOCUMENT
SET INPUT — 21

CLASS LABELLING — 22

DOCUMENT PREPROCESSING — 23

TRAINING DOCUMENT DATABASE
CONSTRUCTION FOR EACH
CLASS — 24

NEXT CLASS

CALCULATION OF CLASS-PAIR
SIMILARITY FOR TRAINING
DOCUMENT SETS — 25

SIMILARITY
$> \alpha$ — 26

YES

CLOSE TOPIC
CLASS-PAIR
OUTPUT — 27

NO

COMPLETED
FOR ALL CLASS-
PAIRS? — 28

NO

YES

END

FIGURE 3

14

DOCUMENT SET
$\Omega_A$

DOCUMENT 1

DOCUMENT 2

DOCUMENT r

DOCUMENT R

# FIGURE 4(a)

DOCUMENT r

1

:

y | y-th document segment

Y

DOCUMENT SEGMENT
VECTOR
$d_{ry}$

# FIGURE 4(b)

START

DOCUMENT
SET INPUT — 31

DOCUMENT PREPROCESSING — 32

DOCUMENT CLASSIFICATION — 33

ACTUAL DOCUMENT DATABASE
CONSTRUCTION FOR EACH
CLASS — 34

NEXT CLASS

CALCULATION OF SIMILARITY
BETWEEN A TRAINING
DOCUMENT $\Omega_A$ AND THE ACTUAL
DOCUMENT SET OF THE SAME
CLASS $\Omega'_A$ — 35

SIMILARITY
$> \beta$

36

YES → DETERIORATED
CLASS OUTPUT — 37

NO

NO

COMPLETED
FOR ALL
CLASS? — 38

YES

END

FIGURE 5a

FIGURE 5b

FIGURE 6

FIGURE 7